(19) Europäisches Patentamt
European Patent Office
Office européen des brevets

(11) **EP 2 539 576 B1**

(12) **EUROPÄISCHE PATENTSCHRIFT**

(45) Veröffentlichungstag und Bekanntmachung des Hinweises auf die Patenterteilung:
**22.02.2017 Patentblatt 2017/08**

(21) Anmeldenummer: **11705209.2**

(22) Anmeldetag: **23.02.2011**

(51) Int Cl.:
**F02N 11/08** *(2006.01)*

(86) Internationale Anmeldenummer:
**PCT/EP2011/052631**

(87) Internationale Veröffentlichungsnummer:
**WO 2011/104248 (01.09.2011 Gazette 2011/35)**

(54) **VERFAHREN ZUR BESTIMMUNG EINER DREHZAHL EINER ANTRIEBSWELLE EINER BRENNKRAFTMASCHINE**

METHOD FOR DETERMINING A ROTATIONAL SPEED OF A DRIVESHAFT OF AN INTERNAL COMBUSTION ENGINE

PROCÉDÉ PERMETTANT DE DÉTERMINER LA VITESSE DE ROTATION D'UN ARBRE D'ENTRAÎNEMENT D'UN MOTEUR À COMBUSTION INTERNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.02.2010 DE 102010009648**

(43) Veröffentlichungstag der Anmeldung:
**02.01.2013 Patentblatt 2013/01**

(73) Patentinhaber: **Robert Bosch GmbH
70442 Stuttgart (DE)**

(72) Erfinder:
• **CWIK, Matthias
70197 Stuttgart (DE)**
• **ROESSLE, Markus
70199 Stuttgart (DE)**
• **MAURITZ, Ewald
71287 Weissach (DE)**
• **TUMBACK, Stefan
70469 Stuttgart (DE)**

(56) Entgegenhaltungen:
**EP-A2- 1 457 652      EP-A2- 1 574 835
DE-A1- 10 217 560      DE-A1-102004 004 573
DE-A1-102005 016 053      DE-A1-102005 027 650
DE-A1-102005 033 692      DE-A1-102008 041 037**

**Beschreibung**

Stand der Technik

Die Erfindung bezieht sich auf ein Verfahren zur Bestimmung einer Drehzahl einer sich drehenden Antriebswelle einer Brennkraftmaschine. Ausgehend von einer sich drehenden, ihre Winkelgeschwindigkeit makroskopisch verringernde Antriebswelle, soll die Drehzahl der Antriebswelle, beispielsweise der Kurbelwelle, zu einem späteren Zeitpunkt ermittelt werden (Prognose der Drehzahl bzw. des Drehzahlverlaufs). Unter einer makroskopisch verringernden Winkelgeschwindigkeit wird hier beispielsweise die Eigenschaft verstanden, dass sich eine Drehzahl für einen Menschen erkennbar ändert. Eine solche Situation ist beispielsweise dann gegeben, wenn die Brennkraftmaschine ausgeschaltet wird und beispielsweise vom Leerlauf in den Stillstand übergeht.

Aus der DE 10 2006 011 644 A1 ist eine Vorrichtung und ein Verfahren zum Betrieb einer Vorrichtung mit einem Starterritzel und einem Zahnkranz einer Brennkraftmaschine bekannt. Es wird dabei die Drehzahl des Zahnkranzes und des Starterritzels ermittelt, um das Starterritzel nach dem Ausschalten der Brennkraftmaschine mit im Wesentlichen gleicher Drehzahl beim Auslaufen der Brennkraftmaschine einzuspuren. Um die synchronen Einspurdrehzahlen zu ermitteln, werden Werte aus einem Kennfeld eines Steuergeräts zugeordnet.

Die DE 10 2006 039 112 A1 beschreibt ein Verfahren zum Bestimmen der Drehzahl des Starters einer Brennkraftmaschine. Es wird beschrieben, dass der Starter ein eigenes Starter-Steuergerät umfasst, um die Drehzahl des Starters zu berechnen und um in einem Start-Stopp-Betrieb das Ritzel des Starters zuerst ohne Einspuren zu beschleunigen, wenn ein Selbststart der Brennkraftmaschine aufgrund gesunkener Drehzahl nicht mehr möglich ist. Das Ritzel wird mit synchroner Drehzahl in den Zahnkranz der auslaufenden Brennkraftmaschine eingerückt.

In der deutschen Anmeldung DE 102008041037 ist beschrieben, wie ein Drehzahlverhalten einer Kurbelwelle einer Brennkraftmaschine prognostiziert wird. Es werden dabei zur Vorausberechnung des Drehzahlverhaltens der Kurbelwelle bzw. der Antriebswelle und des Zeitpunkts für folgende obere Totpunkte und untere Totpunkte Drehzahl- bzw. Zeitpaare vergangener oberer Totpunkte bzw. unterer Totpunkte (relative Extrema) verwendet,

Gemäß der DE 10 2008 041 037A1 wird die Winkelgeschwindigkeit im Bereich von vorbestimmten, charakteristischen Positionen der Kurbelwelle bestimmt, die dem zündbaren oberen Totpunkten entsprechen.

Gemäß der DE 10 2005 033 692 A1 wird ein Verfahren zum Abschätzen der Motorstoppposition beschrieben. Dieses Verfahren berücksichtigt eine momentane Motordrehzahl bei jeder Kompression als einen Parameter, der einen Motorbetrieb repräsentiert. Die ECU berechnet die momentane Motordrehzahl durch Messen eines Zeitraums der erforderlich ist, um die Kurbelwelle über einen Winkelbereich zu drehen. Es wird dabei ein Energiegleichgewicht berücksichtigt.

Offenbarung der Erfindung

Das erfindungsgemäße Verfahren mit den Merkmalen des Hauptanspruchs hat den Vorteil, dass bei der Bestimmung einer Drehzahl einer Antriebswelle einer Brennkraftmaschine zu zumindest einem späteren Zeitpunkt Drehpositionen der sich drehenden Antriebswelle verwendet werden, wobei diese Drehpositionen so ausgewählt sind, dass ein vergangenes mittleres Drehverhalten ermittelbar bzw. errechenbar ist. Daraus kann auf eine mittlere Drehzahl zu zumindest einem späteren Zeitpunkt geschlossen werden.

Dies führt dazu, dass üblicherweise regelmäßig auftretende extreme Drehpositionen bzw. Dreheigenschaften der Antriebswelle bei oberen Totpunkten (OT) oder unteren Totpunkten (UT) nicht zur Berechnung herangezogen werden und dadurch letztlich bessere Vorhersageergebnisse erzielt werden. Dies ist insofern von Bedeutung, als dass beispielsweise durch teilweise oder vollständig geschlossene Luftansaugklappen im Luftversorgungteil der Brennkraftmaschine beispielsweise die Lage eines unteren Totpunkts in einer Drehzählverlaufskurve verhältnismäßig stark beeinflusst werden kann. Diese Einrichtung beeinflusst auf gleiche Art und Weise dann auch das Drehzahlverhalten im oberen Totpunkt. Durch die Verwendung von Drehpositionen zwischen oberen Totpunkten und unteren Totpunkten bzw. Drehpositionen der Antriebswelle, die zwischen Positionen liegen, in denen der eine oder andere Zylinder einer Brennkraftmaschine in einem oberen oder unteren Totpunkt befindlich ist, führt dazu, dass die Prognose des Drehzahlverhaltens deutlich stabiler und zuverlässiger wird.

Zur weiteren Stabilisierung der Vorausberechnung bzw. Prognose des weiteren mittleren Verlaufs des Drehzahlverhaltens wird nach einer weiteren Gestaltung der Erfindung nach dem Ermitteln eines vergangenen mittleren Drehverhaltens ein weiteres vergangenes mittleres Drehverhalten ermittelt. Dies kann vorteilhafter Weise dann dazu verwendet werden, um auf eine mittlere Drehzahl zumindest eines späteren Zeitpunkts zu schließen. Mit diesem weiteren vergangenen mittleren Drehverhalten kann die ursprüngliche Prognose aufgrund eines weiteren vergangenen mittleren Drehverhaltens weiter verbessert werden. Dies kann beispielsweise dadurch durchgeführt werden, dass lediglich das weitere vergangene mittlere Drehverhalten dazu verwendet wird, ohne das bisherige vergangene mittlere Drehverhalten für die Prognose zu verwenden (vollständige Aktualisierung).

Das weitere vergangene mittlere Drehverhalten kann aber auch dazu verwendet werden, um ein bekanntes vergangenes mittleres Drehverhalten in seiner Aussagekraft zu stabilisieren, indem beispielsweise ein arithmetischer Mittelwert zweier mittlerer vergangener Drehverhalten innerhalb unterschiedlicher Zeitabschnitte ermittelt wird. Gemäß einer weiteren Ausgestaltung der Erfindung ist vorgesehen, dass dieser arithmetische Mittelwert des mittleren Drehverhaltens ein gleitender Mittelwert ist. Es können dabei beispielsweise die letzten drei, vier, fünf oder mehr mittleren vergangenen Drehverhalten herangezogen werden.

Da das mittlere Drehverhalten der Brennkraftmaschine nicht dem realen Drehverhalten entspricht, sondern nur eine Annäherung darstellt, ist gemäß einer weiteren Gestaltung der Erfindung vorgesehen, dass zur Ermittlung einer prognostizierten Drehzahl mit gesteigerter Präzision zu einer mittleren Drehzahl zu einem bestimmten Zeitpunkt ein Wechselanteil addiert wird. Dieser Wechselanteil sorgt dafür, dass über das mittlere Drehverhalten die Schwingungsteile des tatsächlichen Verlaufs bzw. Verhaltens einer ausgehenden Brennkraftmaschine überlagert wird. Durch diesen Wechselanteil wird letztlich der prognostizierte Drehzahlverlauf so realistisch wie möglich vorhergesagt (prognostiziert). Es ist dabei vorgesehen, dass der Wechselanteil als Produkt eines normierten Werts und eines drehzahlabhängigen Amplitudenkennwerts bestimmt wird.

Gemäß einer weiteren Gestaltung der Erfindung ist vorgesehen, dass ein normierter Wert in einem Kennfeld gespeichert ist, wobei einem normierten Wert eine Drehposition zugeordnet ist und ein drehzahlabhängiger Amplitudenkennwert in einem anderen Kennfeld gespeichert ist. Gemäß einem Unteranspruch ist vorgesehen, dass in Abhängigkeit von der Drehzahl der Antriebswelle mehrere verschiedene Kennlinien in einem oder mehreren Kennfeldern gespeichert sind, wobei über die mehreren unterschiedlichen Kennlinien unterschiedliche Amplitudenkennwerte ermittelbar sind. Dies hat den Vorteil, dass beispielsweise unterschiedliche Amplitudenkennwerte ermittelt werden können und dadurch die Vorausberechnung des prognostizierten Drehzahlverhaltens an Änderungen im System angepasst werden kann.

Kurze Beschreibung der Zeichnungen.

Die Erfindung wird anhand mindestens eines Ausführungsbeispiels unter Bezugnahme auf Zeichnungen näher erläutert.

In den Zeichnungen sind Ausführungsbeispiele des erfindungsgemäßen Verfahrens, sowie eine Steuervorrichtung und ein System mit einer Steuervorrichtung und einer Startvorrichtung dargestellt. Es zeigen:

| | |
|---|---|
| Figur 1 | eine schematische Ansicht einer Brennkraftmaschine mit einer Antriebswelle, |
| Figur 2 | ein erstes beispielhaftes Drehzahl-/Zeitdiagramm, welches den zeitabhängigen Drehzahlverlauf einer Antriebswelle zeigt, |
| Figur 3 | einen Ausschnitt des Drehzahldiagramms, welches in Figur 2 gezeigt ist, |
| Figur 4 | einerseits das Drehzahl-/Zeitdiagramm aus Figur 2 mit der Kurve K sowie überlagert die jeweiligen Wechselanteile der Kurve K, die einem mittleren Drehzahlverlauf überlagert sind, |
| Figur 5 | eine normierte motortypspezifische Energietransformationskennlinie, |
| Figur 6 | mehrere motortypspezifische Amplitudenkennlinien, |
| Figur 7 | ein Verfahren zur Ermittlung von Amplituden, |
| Figur 8 | eine Ausschnittvergrößerung der Figur 6, |
| Figur 9 | ein Beispiel für ein Berechnungsverfahren, |
| Figur 10a, Figur 10b und Figur 11 | verschiedene Drehzahlprognosen, |
| Figur 12 | schematisch ein Kraftfahrzeug. |

Ausführungsformen der Erfindung

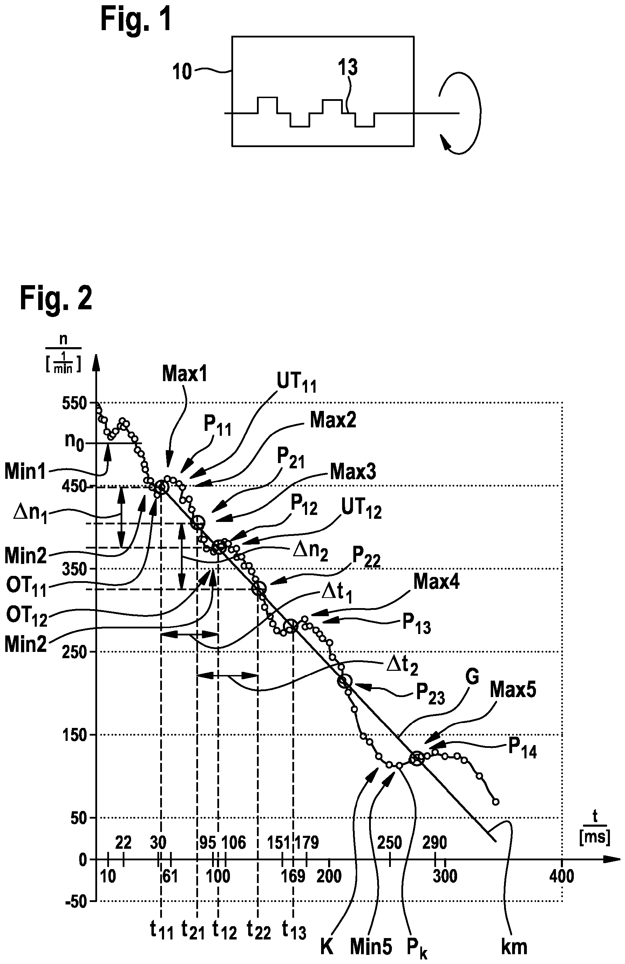

In Figur 1 ist schematisch eine Brennkraftmaschine 10 dargestellt. Diese Brennkraftmaschine 10 hat neben vielen anderen Bauteilen u. a. eine Antriebswelle 13, die beispielsweise als Kurbelwelle ausgeführt ist. Als solche Kurbelwelle wird diese Antriebswelle 13 mittels nicht dargestellter Pleuel und an diesen angelenkten Kolben angetrieben. Diese Kolben wiederum werden üblicherweise in Zylindern durch sogenannte innere Verbrennung angetrieben. Die diesbezüglichen Zusammenhänge sind vielfältig bekannt. Die Antriebswelle 13 kann alternativ auch die Exzenterwelle eines Kreiskolbens-Wankelmotors sein.

In Figur 2 ist beispielhaft ein Drehzahl-/Zeitdiagramm (n(t)-Diagramm) dargestellt. In diesem Diagramm ist gezeigt, welche momentane Drehzahl n(t) eine Antriebswelle 13 hat, wenn sich die Brennkraftmaschine 10 im sogenannten Auslauf befindet. Sich-im-Auslauf-befinden bedeutet, dass die Brennkraftmaschine 10 nicht mehr befeuert wird, d. h. über die Antriebswelle 13 soll keine Antriebsleistung mehr an die Antriebsräder eines Kraftfahrzeugs abgegeben werden.

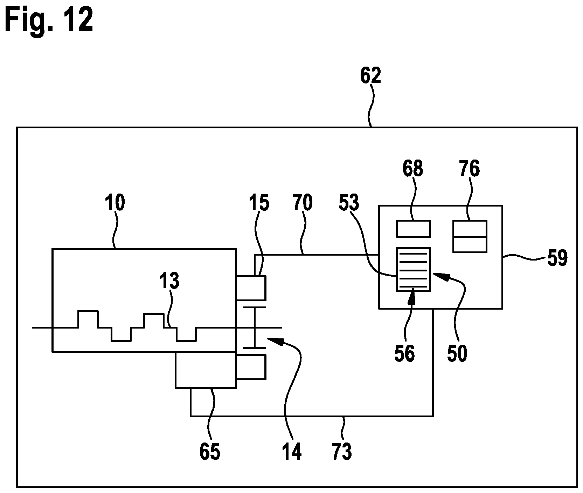

In Figur 2 ist zunächst beispielhaft ein Drehzahl (n)-/Zeit(t)-Verlauf einer Antriebswelle 13 aufgenommen und in diesem Diagramm dargestellt. Zur Ermittlung der Kurve K wurden Signale ausgewertet. Diese Signale wurden erhalten, indem ein mit der Antriebswelle 13 drehfest verbundenes Signalrad 14 mittels eines Sensors 15 (Figur 12) abgetastet wurde. Dieses Signalrad weist ein Lochraster auf, wodurch im Wesentlichen alle sechs Winkelgrade ein Signal erhalten werden kann. Ein jeder der kleinen Punkte $P_K$ entstand durch Auswertung dieses Signalrads. Die Kurve K ist ein sogenannter Polygonzug, der die Mittelpunkte der Vielzahl der Punkte $P_K$ miteinander verbindet.

Beim Betrachten der Kurve K erkennt man, dass der Kurvenverlauf über einen längeren Zeitabschnitt hinweg im Wesentlichen stark abfallend ist (makroskopisch, beispielsweise zwischen t=0 und t13 = 160ms später), was bei einer abgeschalteten Brennkraftmaschine nicht überrascht. Diesem im Wesentlichen stark abfallenden Kurvenverlauf ist des Weiteren entnehmbar, dass die Drehzahlwerte in Abhängigkeit von der Zeit um einen Mittelwert bzw. ein mittleres konstantes Gefälle repräsentiert durch die scheinbar durchgehende Linie G schwanken. Die Linie G ist eigentlich eine vereinfachte Darstellung von mehreren kurzen Strecken, die zumindest zwischen zwei benachbarten Stützpunkten wie P11 und P12 bzw. P12 und P13 oder bspw. zwischen P21 und P22 bzw. P22 und P23 gerade sind. Tatsächlich kann es sich ergeben, dass bspw. die Strecken zwischen P11 und P12 bzw. P12 und P13 insgesamt die gleiche Steigung m aufweisen und daher gerade und knickfrei bei P12 ineinander übergehen. So sind ausgehend vom Ursprung dieses Diagramms relative Minima zu den Zeitpunkten 10ms, 50ms, 95ms, 151ms und 250ms erkennbar. Relative Maxima sind zu den Zeitpunkten 22ms, 61ms, 106ms, 174ms und 290ms zu erkennen. Die relativen Minima sind mit den Bezeichnungen Min1, Min2, Min3, Min 4 und Min5, die relativen Maxima mit Max1, Max2, Max3, Max4 und Max5 bezeichnet. Diese relativen Minima und relativen Maxima kommen durch die typischen Kompressions- und Dekompressionszyklen der Brennkraftmaschine 13 zu Stande. Dieser Kurve K ist im Übrigen nicht anzusehen, ob dies eine Kurve K ist, die das Drehzahlverhalten einer 2-, 3-, 4-, 6- oder 8-Zylinder-Brennkraftmaschine beschreibt. Die in Figur 2 dargestellten Punkte $P_K$ wurden beispielhaft an einer 6-Zylinder-Brennkraftmaschine ermittelt.

Nachfolgend wird beschrieben, wie ausgehend von verschiedenen Drehpositionen der Antriebswelle 13 zu unterschiedlichen Zeitpunkten und damit von Drehpositionen zu unterschiedlichen Zeitpunkten in der Vergangenheit auf ein Drehverhalten der Antriebswelle 13 zu einem späteren Zeitpunkt geschlossen wird.

In Figur 2 ist eine Ausgangsdrehzahl $n_0$ beschrieben, die hier bei 500/min festgelegt sein soll. Diese Ausgangsdrehzahl $n_0$ steht für ein Ereignis, das sozusagen eine Startbedingung für das erfindungsgemäße Verfahren sein soll. Wird diese Ausgangsdrehzahl $n_0$ unterschritten, so beginnt beispielsweise der Verfahrensablauf. Herkömmliche Brennkraftmaschinen verfügen über Mittel, um die Drehzahl ihrer Kurbelwelle bzw. Antriebswelle zu detektieren. Alternativ könnte man auch eine Drehzahl einer damit korelierenden Welle auswerten, bspw. einer Nockenwelle der Brennkraftmaschine oder die Drehzahl eines Stromgenerators (Wechselstromgenerator). Das Verfahren beginnt mit der Ermittlung von Drehpositionen PHI11, PHI 12; PHI 21, PHI 22 und deren zugeordneten Zeitpunkten t11, t12; t21, t22 unterhalb einer eingestellten Drehzahlschwelle (n0).

Die Antriebswelle 13 dreht sich auch nach dem Unterschreiten der Ausgangsdrehzahl $n_0$ weiter. Der Winkelabstand zwischen nahezu jedem in Figur 2 gezeigten allgemeinen Punkt $P_K$ beträgt sechs Winkelgrade bezogen auf die Drehung der Antriebswelle 13. Eine vollständige Umdrehung der Antriebswelle 13 benötigt 360°. Die Antriebswelle 13 durchläuft dabei die ganzen tatsächlich gemessenen Punkte $P_K$, die in Figur 2 dargestellt sind. Um aus einer Vergangenheitsbetrachtung, d. h. anhand durchgelaufener Punkte $P_K$ bzw. Zustände (n(t)) der Antriebswelle 13 auf in der Zukunft stattfindende Ereignisse zu schließen, d. h. ein Drehverhalten der Antriebswelle 13 in der Zukunft zu ermitteln, wird dabei folgendes Vorgehen vorgeschlagen:

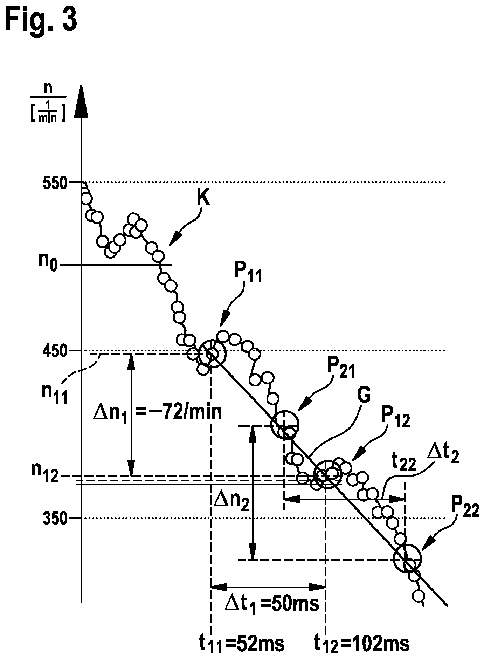

Im Rahmen des Verfahrens wird eine charakteristische Drehposition gewählt (Phi11. Ausgehend von dieser Drehposition Phi11 der Antriebswelle 13, für die der Punkt P11 steht und der ein Punkt $P_K$ der Kurve K ist, wird eine weitere Drehposition Phi12 der Antriebswelle 13, repräsentiert durch den Punkt P12, verwendet, um eine mittlere Steigung zwischen diesen beiden Punkten P11 und P12 zu ermitteln. Aus Gründen der Übersichtlichkeit ist der eben erwähnte Abschnitt der Kurve K in Figur 3 vergrößert dargestellt. Der Drehzahlunterschied zwischen der Drehzahl n11 im Punkt P11 und der Drehzahl n12 im Punkt P12 beträgt -72 Umdrehungen/min. Der Zeitunterschied zwischen dem Punkt P12 zum Zeitpunkt t12 und dem Punkt P11 zum Zeitpunkt t11 beträgt $\Delta t_1$ = 50ms. Bezüglich eines Zeitpunktes nach t12 lässt sich damit ein vergangenes mittleres Drehverhalten ermitteln. Dieses mittlere Drehverhalten, hier auch mit dem Buchstaben $m_1$ bezeichnet, entspricht der mittleren Steigung zwischen den beiden Punkten P11 und P12. Ausgehend beispielsweise von den Eigenschaften, die im Punkt P12 vorliegen - d. h. nach dem Durchlaufen des nächsten relativen Minimums - kann dann beispielsweise zum Zeitpunkt t13 = 160ms geschlossen werden, welche mittlere Drehzahl n13 im Punkt P13 vorliegt. Als vergangenes mittleres Drehverhalten m1 ergibt sich der Quotient m1 = $\Delta$n1/$\Delta$t1 = -72/(50ms*min) = - 1,44/(ms*min). Für den Zeitpunkt t13 = 160ms, siehe auch Figur 2, ergibt sich in der Folge mit einem Zeitunterschied von $\Delta$t = 58ms und einem vergangenen mittleren Drehverhalten m1 = -1,44/(ms*min) ein Drehzahlunterschied zwischen $P_{12}$ und $P_{13}$ von $\Delta$n2 = -83,5/min und demnach eine Drehzahl $n_{13}$ = $n_{12}$ + $\Delta$n2 = 370/min - 83,5/min = 276,5/min. Der Zeitpunkt $t_{13}$, der hier als Schnittpunkt der Kurve K mit der mittleren Steigung im Beispiel nicht willkürlich gewählt ist, steht speziell für einen späteren ganz allgemeinen Zeitpunkt tX. Die Drehzahl $n_{13}$ steht für eine spätere, vorausbestimmte mittlere Drehzahl nX zu dem Zeitpunkt tX.

Es ist somit ein Verfahren zur Bestimmung einer Drehzahl nX(tX) einer Antriebswelle 13 einer Brennkraftmaschine 10 zu mindestens einem späteren Zeitpunkt tX offenbart. Die sich drehende Antriebswelle 13 nimmt verschiedene Drehpositionen PHI11, PHI12, PHI21, PHI22 etc. zu verschiedenen Zeitpunkten t11, t12, t21, t22 etc. ein, wobei aus zumindest zwei Drehpositionen PHI11, PHI12 bzw. PHI21, PHI22 ein vergangenes mittleres Drehverhalten m1, m2 etc. ermittelbar ist. Aus diesem mittleren Drehverhalten m1, m2 wird zu mindestens einem späteren Zeitpunkt tX auf eine mittlere Drehzahl nX geschlossen.

Zur Berücksichtigung von Einflüssen, die auf den Verlauf der Kurve K einen mehr oder weniger bedeutenden Einfluss haben könnten, ist gemäß einem weiteren Vorschlag vorgesehen, ein weiteres vergangenes mittleres Drehverhalten m2 zu berücksichtigen. Als Beispiel hierfür können zu dem bereits beschriebenen Vorgehen für das mittlere Drehverhalten m1 und die beiden Punkte P11 und P12 die Punkte P21 und P22 dienen. In diesem Fall befindet sich der Punkt P21, von dem ausgehend das nächste mittlere Drehverhalten m2 ermittelt wird, an einer Drehposition PHI21 und der Punkt P22 an einer Drehposition PHI22. Sowohl die Drehposition PHI21 als auch die Drehposition PHI22 sind wiederum so gewählt, dass durch diese beiden Punkte P21 und P22 im Wesentlichen eine mittlere Steigung der Kurve K beschreibbar ist.

Im Punkt P22 hat die Antriebswelle 13 die Eigenschaft, d. h. Momentandrehzahl, n22 und im Punkt P21 die Eigenschaft, d. h. Momentandrehzahl, n22. $\Delta n2 = n22 - n21$ ergibt sich hier zu -74/min pro Minute, die Zeitdifferenz $\Delta t2$ zwischen den Punkten P22 und P21 ergibt sich zu 53ms. Nach dem Zeitpunkt t22 im Punkt P22 lässt sich ein vergangenes mittleres Drehverhalten m2 ermitteln. Dieses entspricht der mittleren Steigung zwischen den beiden Punkten P21 und P22. Als vergangenes mittleres Drehverhalten m2 ergibt sich der Quotient $\Delta n2/\Delta t2 = m2 = -74/(53ms*min) = -1,40((ms*min)$.

Wie hier beschrieben, wird nach dem Ermitteln eines vergangenen mittleren Drehverhaltens m1 ein weiteres vergangenes mittleres Drehverhalten m2 ermittelt.

Ausgehend von diesem zweiten bzw. weiteren vergangenen Drehverhalten m2, kann das Verfahren auf zumindest zwei verschiedene Weisen fortgeführt werden. In einem ersten Verfahrensfortschritt wird vorgeschlagen, die jüngste Vergangenheitsbetrachtung - hier das mittlere Drehverhalten m2 - als weitere alleinige Grundlage zur Ermittlung einer kommenden, späteren Eigenschaft, d. h. Momentandrehzahl nX, zu einem späteren allgemeinen Zeitpunkt tX zu verwenden.

Dieser Zeitpunkt kann beispielsweise der Zeitpunkt t13 oder ein anderer Zeitpunkt sein. Das eben beschriebene Verfahren zur Bestimmung dieser späteren Eigenschaft nX - hier n13 - zum Zeitpunkt tX - hier t13 - wird dann analog angewendet, um durch m2 n13 zum Zeitpunkt t13 zu erhalten.

Die zweite Möglichkeit durch ein angenommenes späteres mittleres Drehverhalten mX in einem Zeitpunkt tX zur Ermittlung einer kommenden, späteren Eigenschaft, d. h. Momentandrehzahl nX zu einem späteren allgemeinen Zeitpunkt tX zu schließen besteht darin, die beiden mittleren Drehverhalten m1 und m2 dazu zu verwenden, einen arithmetischen Mittelwert des mittleren Drehverhaltens mq zu ermitteln.

Dementsprechend ergibt sich als ein arithmetischer Mittelwert und damit ein mittleres (fiktives) Drehverhalten $mq = -1,42/(ms*min) = ½*(ml + m2)$.

Ausgehend von dem Punkt P22 kann dann beispielsweise mit dem aus dem beiden genannten mittleren Drehverhalten m1 und m2 gebildeten Mittelwert $mq = -1,42/(ms*min)$ auf ein mittleres fiktives, d. h. theoretisches, Drehverhalten mX zu einem späteren Zeitpunkt tX geschlossen werden. Für den Zeitpunkt t23 = 213ms beim Punkt P23, ergibt sich somit ausgehend von t22 = 135 ms und damit 78 ms später im Punkt P23, eine Drehzahlverringerung um $\Delta n3 = -110/min$, so dass sich zum Zeitpunkt t23 eine Drehzahl $n23 = n22 + \Delta n3 = 328/min -110/min = 218/min$ ergibt.

Das Prinzip dieses Verfahrens bzw. der verschiedenen Verfahrensvarianten ist bis hierher deutlich geworden. Es ist ohne Weiteres möglich, weitere mittlere Drehverhalten m3 ... mi (i entspricht einer ganzen Zahl wie 4, 5, 6, 7 etc.) zu berücksichtigen. Sollen zu alte Drehverhalten m keine Berücksichtigung mehr finden und jeweils die aktuellste Prognose aus einem mittleren Drehverhalten mi verwendet werden, um die Zukunft bzw. das spätere mittlere Drehverhalten mX zu ermitteln, werden ältere Drehverhalten nicht berücksichtigt und stattdessen bspw. die jeweils aktuellste mittlere Drehzahleigenschaft berücksichtigt. So können beispielsweise jeweils die zwei, drei oder vier (oder mehr) jüngsten Drehverhalten berücksichtigt werden ("gleitendes" mittleres Drehverhalten).

Aus den genannten mittleren Drehverhaltne m1 bis mi kann daher auch ein arithmetischer Mittelwert gebildet werden. Dies würde bedeuten, dass alle oder zumindest ein guter Teil der zuvor ermittelten mittleren Drehverhalten m1 bis mi Berücksichtigung findet ($mq = 1/i*(m1 + m2 + ... + mi)$. mi muss dabei nicht das jüngste ermittelte Drehverhalten sein. Es kann sich dabei auch um das vorletzte ermittelte mittlere Drehverhalten handeln. Es ist im Rahmen dieses Verfahrens als Alternative vorgesehen, dass das mittlere Drehverhalten mq ein gleitender Mittelwert ist. Dies bedeutet, dass beispielsweise für ein mittleres Drehverhalten mq, welches für die Bestimmung des Drehverhaltens bzw. einer Drehzahl zum Zeitpunkt tX verwendet werden soll, beispielsweise nur aus - bspw. den letzten - drei mittleren Drehverhalten mi, mi-1 und mi-2 besteht ($mq = 1/3*(mi + mi-1 + mi-2)$. Des Weiteren kann das mittlere Drehverhalten mq als gleitender Mittelwert natürlich auch nur aus zwei mittleren Drehverhalten der Vergangenheit mi und $m_{i-1}$ ermittelt werden ($mq = 1/2*(m_i + m_{i-1})$.

Bezogen beispielsweise auf die Figur 2 würde dies bedeuten, dass zwei mittlere Drehverhalten mi und mi-1 der Vergangenheit verwendet werden, um den gleitenden Mittelwert mq zu ermitteln. Das bedeutet für den Zeitpunkt t22 und die Zeit danach, dass die mittleren Drehverhalten m1 und m2 verwendet werden, um einen Mittelwert des mittleren Drehverhaltens mq zu bestimmen. Nach dem Zeitpunkt t13, und damit nach der Ermittlung des mittleren Drehverhaltens m3 (aus den Zuständen der Punkte P12 und P13 ermittelt), würde beispielsweise das erste mittlere Drehverhalten m1 als Berechnungsgrundlage entfallen und dafür neben dem mittleren Drehverhalten m2 das zuletzt ermittelte mittlere Drehverhalten m3 verwendet werden, um ein mittleres Drehverhalten mq zu verwenden und daraus die Prognose zu ermitteln (mq = ½*(m2 + m3).

Es ist demgemäß ein Verfahren offenbart, wonach der arithmetische Mittelwert des mittleren Drehverhaltens mq ein gleitender Mittelwert ist, wobei zur Ermittlung eines aktuellen arithmetischen Mittelwerts des mittleren Drehverhaltens mq ein älteres vergangenes mittleres Drehverhalten m1 gegen ein jüngeres vergangenes mittleres Drehverhalten m3 ausgetauscht wird.

Der bis hier beschriebene Verfahrensablauf ist der Kern des hier vorgestellten Verfahrens. Dabei wird die mittlere Steigung des aktuellen Auslaufs bei wenigen, sich periodisch wiederholenden Kurbelwellen- bzw. Antriebswellenpositionen ermittelt.

Dabei liegen diese ausgewählten Stützpunkte bzw. Punkte PK (P11, P12, P13, P21, P22, P23, ...) zumindest nahe der mittleren Auslaufsteigung, d.h. der oszillierende Anteil oberhalb und unterhalb der mittleren Auslaufsteigung ist in etwa gleich groß und braucht bei der Steigungsbestimmung nicht berücksichtigt zu werden. Zur Vorhersage des weiteren Auslaufs wird die so ermittelte Steigung m - sei es eine mittleres vergangenes Drehverhalten mq (gleitend oder nicht gleitend) oder bspw. ein letztes vergangenes Drehverhalten - in die Zukunft fortgeschrieben. "Nahe der mittleren Auslaufsteigung" kann z. B. bedeuten, dass die Stützpunkte PK genau oder in etwa zwischen einem UT und einem OT bzw. den jeweiligen Antriebswellenwinkeln PHI liegt.

Zur weiteren Präzisierung des bis hier beschriebenen Verfahrens ist vorgesehen, diesem abschnittsweisen linearen Verlauf mittels einer geeigneten Energietransformationskennlinie (ETF-Kennlinie) den oszillierenden Anteil zu überlagern und demgemäß nicht mehr nur mittlere Drehzahlen zu ermitteln, sondern eine Berechnung vorzunehmen, bei der unter Berücksichtigung der oszillierenden Anteile (Addition oder Subtraktion) für Drehzahlen nX zu Zeitpunkten tX Kurven ermittelt werden können (Kurvensynthese), die realistischen Kurven K sehr nahe kommen. Des Weiteren wird dabei das Verfahren den physikalischen Effekt, wonach die Maximalamplituden des oszillierenden Anteils drehzahlabhängig sind, berücksichtigen.

Für einen Motor bzw. eine Brennkraftmaschine, der bzw. die sich im Auslauf befindet, kann eine normierte motortypspezifische Energietransformationskennlinie formuliert werden. So wird diese beispielsweise einem zentralen Rechner (central processing unit) in geeigneter Weise, bspw. als "look-up"-Tabelle, zur Verfügung gestellt. "Look-up"-Tabellen sind Datenstrukturen, die vorberechnete Daten einer aufwändigen Berechnung enthalten. Mit Hilfe einer solchen Tabelle ist es möglich, komplexe Berechnungen auf die in der Regel erheblich schnellere Wertsuche innerhalb eines Datenfeldes zu reduzieren und zu vereinfachen. Dies bedeutet für den Fall, dass man zu einem bestimmten Wert einen nahe liegenden anderen Wert benötigt, in einer derartigen Tabelle entweder den genau zugeordneten Wert herausliest, oder für den Fall, dass der genaue Wert nicht in dieser Tabelle zur Verfügung steht - kurzerhand einen neuen beispielsweise Mittelwert aus zwei vorhandenen Werten in der Tabelle ermittelt. In dieser Tabelle wird winkeltreu (in Bezug zur Kurbelwelle bzw. Antriebswelle 13 und deren Drehposition PHI) angegeben, welcher Anteil der maximalen Lageenergie gerade als kinetische Energie an der Kurbelwelle bzw. Antriebswelle umgesetzt ist, d.h. die ETF-Kennlinie charakterisiert die zyklisch stattfindende Energieumwandlung von Lageenergie (bspw. bei Position eines Kolbens nahe eines oberen Totpunktes) in kinetische Energie (Bewegungsenergie eines Kolbens zwischen einem oberen Totpunkt und einem unteren Totpunkt) und umgekehrt. Die Minima der ETF-Kennlinie liegen typischerweise bei den Zünd-OT-Positionen des Motors (OT ist die Abkürzung für oberen Totpunkt). Hier ist die in der Kompression gespeicherte Energie maximal und steht somit als Beitrag zur kinetischen Energie des Motors nicht zur Verfügung. Mit Bezug zur Figur 2 ist demnach das Minimum Min2 ein Zeichen dafür, dass sich hier in etwa eine bestimmte Zünd-OT-Position in der Brennkraftmaschine eingestellt hat. Analog dazu ist das Maximum Max2 ein Zeichen dafür, dass sich in etwa ein unterer Totpunkt an der Brennkraftmaschine 10 bzw. an der Antriebswelle 13 eingestellt hat.

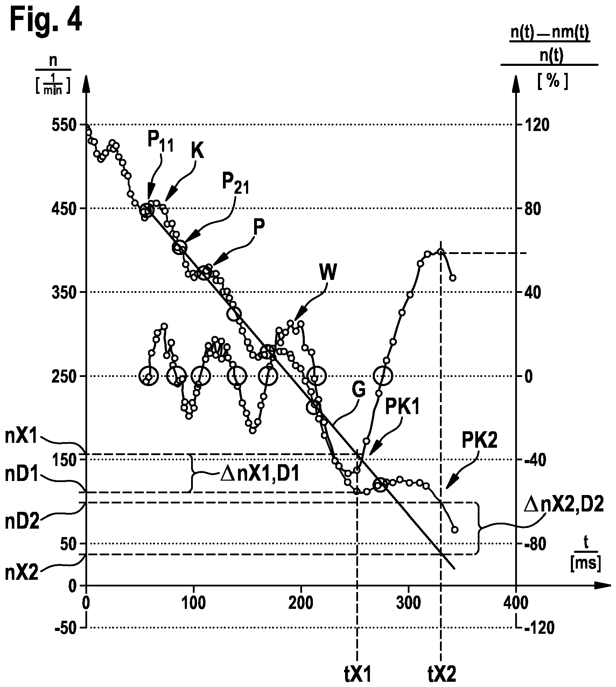

In Figur 4 ist die Kurve K aus Figur 2 gezeigt. Neben dieser Kurve K ist in der Figur 4 eine weitere Kurve W dargestellt. Diese Kurve W macht den Wechselanteil an der tatsächlichen Drehzahl nX zum allgemeinen Zeitpunkt tX deutlich. Demgemäß ist immer dann, wenn der Wechselanteil 0 ist, durch die Kurve K und einer abschnittsweisen Geraden (Linie G) mit der mittleren Drehzahleigenschaft m ein gemeinsamer Schnittpunkt gebildet.

In Figur 4 sind zwei Punkte PK1 und PK2 hervorgehoben. Für den Punkt PK1 gilt die Zeit tX1 und die tatsächliche Drehzahl nD1 mit der Abweichung zur mittleren Drehzahleigenschaft, hier der mittleren Drehzahl nX1. Der Unterschied zwischen nX1 und nD1 ist $\Delta n_{X1,D1}$. Analog dazu ist im Zeitpunkt tX2 die mittlere Drehzahl nX2, die tatsächliche Drehzahl nD2 und der Unterschied zwischen den beiden genannten Drehzahlen $\Delta n_{X2,D2}$ in Punkt PK2. Als Zahlenbeispiel ergibt sich demnach für den Punkt PK2 eine Drehzahl nX2 = 40/min, und für die tatsächliche Drehzahl nD2 = 100/min. Der Unterschied zwischen der tatsächlichen Drehzahl nD2 und der mittleren Drehzahl nX2 ist $\Delta n_{X2,D2}$ = 60/min. Dies bedeutet,

dass der Wechselanteil $\Delta n_{X2,D2}$ an der tatsächlichen Drehzahl nD2 60% beträgt, siehe auch Figur 4. Im Beispiel für den Punkt PK1 ergibt sich als prozentualer Wechselanteil $\Delta_{nX1,D1}$ ein Anteil von -48%. Es wird anhand der Figur 4 deutlich, dass der prozentuale Wechselanteil tendenziell umso höher ist, je niedriger die Drehzahl n bzw. nX ist.

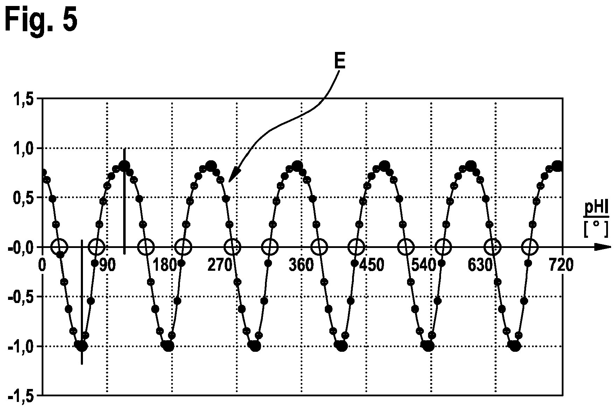

In Figur 5 ist eine normierte motortypspezifische Energietransformationskennlinie dargestellt. Anhand der sechs Minima bzw. Maxima über einen Winkelverlauf von insgesamt 720°, was insgesamt zwei vollständigen Drehungen einer Antriebswelle 13 entspricht, kann erkannt werden, dass diese Figur 5 eine normierte Energietransformationskennlinie eines 6-Zylinder-Motors ist. Da die sechs Minima bzw. Maxima nicht regelmäßig angeordnet sind, handelt es sich nicht um einen Reihen-6-Zylinder, sondern in diesem Fall um einen V6-Zylinder-Motor. Diese normierte Energietransformationskennlinie, hier mit dem Großbuchstaben E bezeichnet, ist hier als Polygonzug dargestellt. D. h. bestimmten Winkeln PHI sind verschiedene Werte zugeordnet. Diese normierte Energietransformationskennlinie wird der zentralen Recheneinheit (CPU) in geeigneter Weise, beispielsweise durch die bereits erwähnte oder eine andere geeignete "Look-up"-Tabelle zur Verfügung gestellt. Diese Tabelle gibt winkeltreu, d. h. für diverse Kurbelwellenwinkel bzw. Antriebswellenwinkel PHI an, welcher Anteil der maximalen Lageenergie gerade als kinetische Energie an der Kurbelwelle bzw. Antriebswelle 13 umgesetzt ist. Die Energietransformationskennlinie E charakterisiert die zyklisch stattfindende Energieumwandlung von Lageenergie in kinetische Energie und umgekehrt. Die Minima der Energietransformationskennlinie liegen typischerweise bei den Zünd-OT-Positionen des Motors. Hier ist - wie bereits erwähnt - in der Kompression gespeicherte Energie maximal und steht somit als Beitrag zur kinetischen Energie des Motors nicht zur Verfügung.

Mit der normierten Energietransformationskennlinie als einem Teil des weiter präzisierten Prognosealgorithmus' wird eine sogenannte Amplitudenkennlinie verwendet. Für einen Motor bzw. eine Brennkraftmaschine, die sich im Auslauf befindet, kann eine motortypspezifische "Standard"-Amplitudenkennlinie formuliert werden. Auch diese Amplitudenkennlinie wird der zentralen Recheneinheit in geeigneter Weise, d. h. auch hier gegebenenfalls als "Look-Up"-Tabelle zur Verfügung gestellt. Die normierte Energietransformationskennlinie ist somit in Gestalt normierter Werte in einem Kennfeld gespeichert, wobei einem normierten Wert eine Drehposition PHI der Antriebswelle 13 zugeordnet ist. Es ist somit ein drehzahlabhängiger Amplitudenkennwert A(n) in einem anderen Kennfeld gespeichert.

Die Standard-Amplitudenkennlinie gibt an, welche Maximalamplituden sich unter Standardbedingungen bei den entsprechenden Maximalpunkten abhängig von der Drehzahl bei diesen beiden Punkten, vgl. auch beispielsweise Figur 4 die Punkte PK1 und PK2, einstellen. Dies bedeutet nicht, dass die beiden Punkte PK1 und PK2 für Standardbedingungen bei dem dort dargestellten Motorauslauf stehen. Dies bedeutet nur, dass die Standardamplitudenkennlinie für die Drehzahl nD1 und nD2 Maximalamplituden unter Standardbedingungen liefert.

Als theoretische Grundlage für die Ermittlung der Amplitude in Abhängigkeit von der Drehzahl können dabei folgende Beziehungen dienen. So kann unter Verwendung der Drehzahldifferenz zwischen unterem Totpunkt und Zünd-OT (oberen Totpunkt) folgende Beziehung für die Amplitude in den lokalen Maxima- bzw. Minima $A(n_A)$ abgeleitet werden:

$$(1) \qquad A(nA) = 1/2 * (((2 * \Delta E)/J) + (nA)^2)^{(1/2)} - n(A)$$

$\Delta E$ ist dabei die Energiedifferenz zwischen dem unteren Totpunkt und dem Zünd-OT, J ist das Trägheitsmoment des Verbrennungsmotors, welches beispielsweise die rotatorischen Trägheitsmomente der Antriebswelle 13, und ggf. der Trägheiten der Pleuel sowie Kolben berücksichtigt, n(A) ist die Drehzahl im lokalen Maximum bzw. Minimum (Zünd-OT/-UT).

Verschiedene Motorausläufe unterscheiden sich abhängig von den gerade eintretenden Umgebungs- und Betriebsbedingungen in ihrer Amplitude des oszillierenden Anteils. Diese Variation wird in dem Parameter K zusammengefasst. Er ist ein Maß dafür, wie viel Energie sich in Kompressionsenergie umwandelt.

$$(2) \qquad K = 2 * \Delta E / J \quad .$$

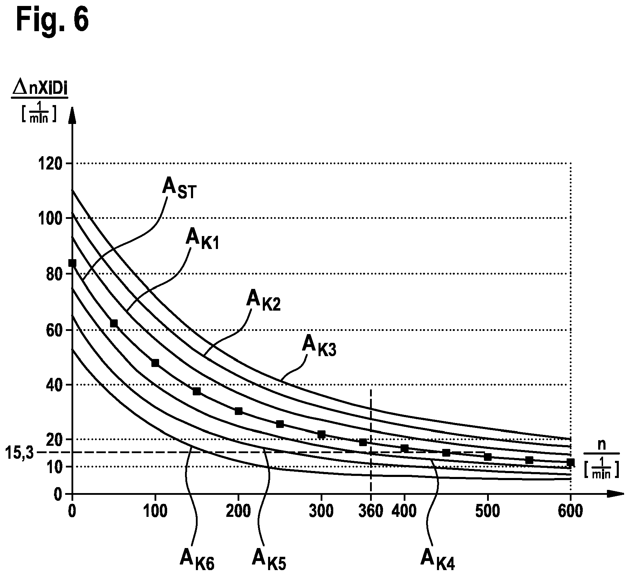

Zur Vermeidung von Wurzelziehen in der zentralen Recheneinheit werden vorzugsweise unterhalb und oberhalb der Standard-Amplitudenkennlinie Kennlinien mit z. B. stufenweise kleinerem bzw. größerem K als "Look-Up"-Tabellen vorgehalten. Der Bereich, der hierbei für K abgedeckt wird, hängt von der möglichen Variation der Umgebung und Umgebungsbedingungen des Motortyps ab. In Figur 6 weist die Standardamplitudenkennlinie AST einen Faktor K von 28.000 auf. Die anderen Amplitudenkennlinien AK1, AK2, AK3, AK4, AK5 und AK6 sind Darstellungen von Kurven mit einem anderen K-Faktor. Jeder dieser Stufen wird ein geeigneter Amplitudenkorrekturfaktor zugeordnet, der dann bei der Prognose des weiteren Auslaufs zum Einsatz kommt. Zur Bestimmung von Zwischenwerten können alle bekannten Interpolationsmethoden (z. B. lineare Interpolation oder Interpolation mittels höhergradiger Polynome) zur Anwendung kommen.

Vorzugsweise kann auch jeder der Stufen eine Rechenvorschrift zugeordnet werden. Diese Rechenvorschrift wird dann bei der Prognose auf die Standard-amplitudenkennlinie angewandt. Somit steht abhängig von der gewählten Stufe eine korrigierte Amplitude zur Verfügung. Auch hier können zusätzlich die gängigen Interpolationsmethoden zwischen den Stufen angewandt werden.

Für einen Motor, der sich im Auslauf befindet, kann eine motortypspezifische Standard-Amplitudenkennlinie AST formuliert werden, die in diesem Fall beispielhaft in Figur 6 dargestellt istf. Die Standard-Amplitudenkennlinie AST gibt an, welche Maximalamplituden sich unter Standardbedingungen bei den entsprechenden Drehzahlen ergeben. Um die Korrekturstufe zu bestimmen, werden die real gemessenen Maximalamplituden drehzahlabhängig mit den Amplituden der verschiedenen Korrekturstufen (K-Stufen) verglichen. Die Stufe, bei der der Vergleich die kleinste Abweichung liefert, wird zur Bestimmung des Korrekturfaktors bzw. zur Festlegung der Korrekturrechenvorschriften benutzt. Beim Vergleich werden vorzugsweise die Beträge und die Summen-/Differenzbildungen so gesetzt, dass sich Abweichungen der Lage des Stützpunkts von der tatsächlichen mittleren Auslaufgeraden mit der Eigenschaft m nur gering bzw. gar nicht auswirken.

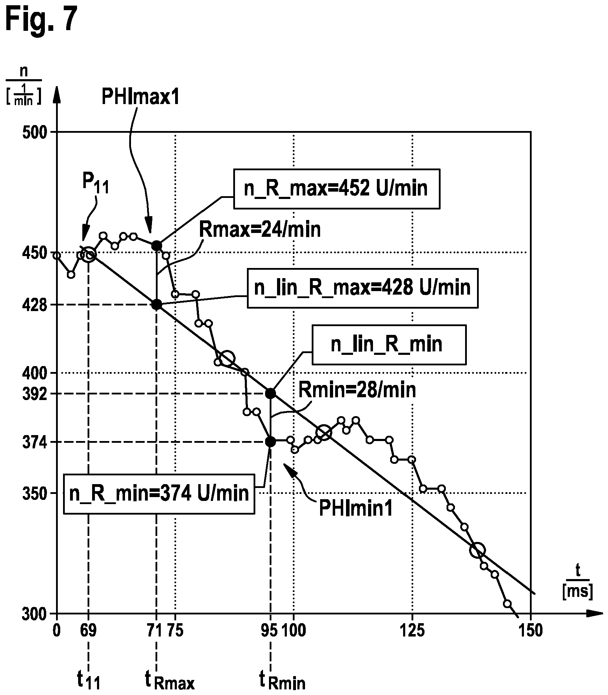

Für jeden Motor wird aus der motortypspezifischen Energietransformationskennlinie, siehe auch Fig. 5, jeweils ein oder mehrere Winkelwerte als Referenzpunkte im Maximum und im Minimum festgelegt und als motortypspezifische Parameter der CPU geeignet zur Verfügung gestellt. Beispielhaft wird hier das Verfahren unter Verwendung nur eines Winkelreferenzwertes im Maximum und nur eines Referenzwinkelwertes im Minimum dargestellt, Figur 7. Die in Figur 7 dargestellten Punkte entsprechen im Wesentlichen den Punkten, wie sie auch in Figur 3 dargestellt sind.

Unterhalb einer vorwählbaren Drehzahlschwelle, die beispielsweise bereits in Figur 3 mit n0 bezeichnet ist, werden die Drehzahlwerte und Zeitpunkte jeweils bei Erreichen der Maximalamplitude Rmax und der Minimalamplitude Rmin erfasst und als Eingangsdaten für weitere Berechnungen zur Verfügung gestellt. Erreicht das eingangs erwähnte Signalrad eine bestimmte Winkelposition (Referenzwinkelwert), die hier beispielsweise mit Phi max1 bezeichnet ist, nach dem die Drehzahlschwelle n0 unterschritten ist, so wird die Drehzahl nRmax ermittelt, die hier bei 452 /min liegt. Ausgehend von dem bereits beschriebenen Berechnungsverfahren zur Ermittlung des mittleren Drehverhaltens m, wird für diesen Referenzwinkelwert Phi max1 der lineare Anteil der Drehzahl n_lin_Rmax ermittelt. D. h. ausgehend von dem Punkt P11, siehe vorhergehende Erläuterung beispielsweise zu Fig. 2 und Fig. 3 in Zusammenhang mit der mittleren Dreheigenschaft m, dem Zeitpunkt t11, dem Zeitpunkt tRmax, lässt sich der lineare Anteil der Drehzahl ermitteln. Dieser lineare Anteil n_lin_Rmax beträgt hier 428/min. Aus den ermittelten Werten für n_Rmax und n_lin_Rmax ergibt sich somit eine Amplitude Rmax bei tRmax zu nRmax - n_lin_Rmax = 24/min.

Für den Winkel Phi min 1 zum Zeitpunkt tRmin = 95 ms (ms = Millisekunden) ergibt sich ein aktueller und tatsächlicher Drehzahlwert von n_Rmin = 374/min. Der lineare Anteil der Drehzahl n_lin_Rmin zum Zeitpunkt tRmin = 95 ms ergibt sich ausgehend von den Eigenschaften des Punktes P11, der mittleren Drehzahleigenschaft M1 und dem Zeitdelta zwischen tRmin und t11 von 31ms zu 392/min. Die Minimalamplitude ergibt sich demzufolge an dieser Position Phi min 1 zu Rmin = 18/min.

Wie bereits zur Fig. 6 erläutert, sind zur Ermittlung der zu prognostizierenden Drehzahl n(t) unter Berücksichtigung des Amplitudenverhaltens ober- und unterhalb des fallenden linearen Anteils der Drehzahlkennlinie beispielsweise eine Standardamplitudenkennlinie AST und Korrekturstufen A1 bis AK6 definiert. Da selbst diese Korrekturstufen AK1 bis AK6 nur Annäherungen an einen tatsächlichen Zustand darstellen können, ist vorgesehen, mittels eines Amplitudenkorrekturfaktors eine noch bessere Annäherung zu erzielen. Um die Korrekturstufe zu bestimmen, die im Einzelfall verwendet werden soll, werden die real gemessenen Maximalamplituden Rmax und Rmin drehzahlabhängig mit den Amplituden der verschiedenen Korrekturstufen verglichen. Die Stufe, bei der der Vergleich die kleinste Abweichung liefert, wird zur Bestimmung des Korrekturfaktors bzw. zur Festlegung der Korrekturrechenvorschrift benutzt. Beim Vergleich werden vorzugsweise die Beträge und die Summen-/Differenzbildungen so gesetzt, dass sich Abweichungen der Lage des Stützpunkts von der tatsächlichen mittleren Auslaufgeraden nur wenig bis gar nicht auswirken: Die Amplitudenabweichung Adev ergibt sich beim Vergleich mit der Standardamplitudenkennlinie formelmäßig zu

$$(3) \qquad \text{Adev\_std} = | \, (\text{Amax\_std}(n) - \text{Rmax}) + (\text{Rmin} - \text{Amin\_std}(n) \, |,$$

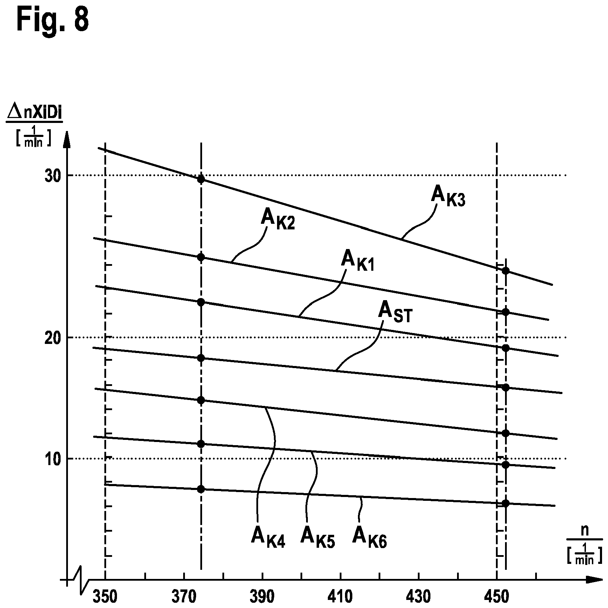

wobei Rmax = 24/min, Rmin = 18/min, Amax_std(n) = 15,3/min, Amin_std(n) = 18/min, so dass sich für Adev_std = 8,7/min ergibt. Aus Figur 8, die eine Ausschnittvergrößerung der Figur 6 darstellt, können die Werte abgelesen werden. Tatsächlich werden die entsprechenden, zwischen festen Tabellenwerten liegenden Werte durch Mittelwertbildung ermittelt. Die Korrekturstufen AST, AK1, Ak2, AK3, AK4, AK5 und AK6 sind beispielsweise als Werte in Abhängigkeit von der Drehzahl der Antriebswelle n gespeichert. Diese mehreren unterschiedliche Kennlinien AST, AK1, Ak2, AK3, AK4, AK5 und AK6 sind in einem oder mehreren Kennfeldern gespeichert, wobei über die mehreren unterschiedlichen Kennlinien AST, AK1, Ak2, AK3, AK4, AK5 und AK6 unterschiedliche Amplitudenkennwerte ermittelbar sind.

Die Amplitudenabweichung Adev ergibt sich beim Vergleich mit der Amplitudenkennlinie der ersten Korrekturstufe (Kurve AK1) formelmäßig zu

$$(4) \qquad Adev\_s1 = |\ (Amax\_s1(n) - Rmax) + (Rmin - Amin\_s1(n)\ |,$$

wobei Rmax = 24/min, Rmin = 18/min, Amax_s1(n) = 19/min, Amin_s1(n) = 24,0/min, so dass sich für

Adev_s1 = 11,0/min ergibt.

Die Amplitudenabweichung Adev ergibt sich beim Vergleich mit der Amplitudenkennlinie der zweiten Korrekturstufe formelmäßig zu

$$(5) \qquad Adev\_s2 = |\ (Amax\_s2(n) - Rmax) + (Rmin - Amin\_s2(n)\ |,$$

wobei Rmax = 24/min, Rmin = 18/min, Amax_s2(n) = 22,0/min, Amin_s2(n) = 26,3/min, so dass sich für

Adev_s2 = 10,3/min ergibt.

Die Amplitudenabweichung Adev ergibt sich beim Vergleich mit der Amplitudenkennlinie der dritten Korrekturstufe formelmäßig zu

$$(6) \qquad Adev\_s3 = |\ (Amax\_s3(n) - ARmax) + (ARmin - Amin\_s3(n)\ |,$$

wobei Rmax = 24/min, Rmin = 18/min, Amax_s3(n) = 33,0/min, Amin_s3(n) = 18/min, so dass sich für

Adev_s3 = 9,0/min ergibt.

Die Amplitudenabweichung Adev ergibt sich beim Vergleich mit der Amplitudenkennlinie der vierten Korrekturstufe formelmäßig zu

$$(7) \qquad Adev\_s4 = |\ (Amax\_s4(n) - Rmax) + (Rmin - Amin\_s4(n)\ |,$$

wobei Rmax = 24/min, Rmin = 18/min, Amax_s4(n) = 14,6/min, Amin_s4(n) = 11,5/min, so dass sich für

Adev_s4 = 2,9/min ergibt.

Die Amplitudenabweichung Adev ergibt sich beim Vergleich mit der Amplitudenkennlinie der fünften Korrekturstufe formelmäßig zu

$$(8) \qquad Adev\_s5 = |\ (Amax\_s5(n) - Rmax) + (Rmin - Amin\_s5(n)\ |,$$

wobei Rmax = 24/min, Rmin = 18/min, Amax_s5(n) = 11/min, Amin_s5(n) = 9,2/min, so dass sich für

Adev_s5 = 4,2/min ergibt.

Die Amplitudenabweichung Adev ergibt sich beim Vergleich mit der Amplitudenkennlinie der sechsten Korrekturstufe formelmäßig zu

$$(9) \qquad Adev\_s6 = |\ (Amax\_s6(n) - Rmax) + (Rmin - Amin\_s6(n)\ |,$$

wobei Rmax = 24/min, Rmin = 18/min, Amax_s6(n) = 7,3/min, Amin_s6(n) = 6/min, so dass sich für

Adev_s6 = 4,7/min ergibt.

Wie sich somit aus den vorstehenden Berechnungen ergibt, ist die vierte Korrekturstufe jene, die sich am besten für eine Vorausberechnung eignet.

Nach der Ermittlung der ersten Auslaufsteigung bzw. mittleren Drehverhalten m1 und bei jeder weiteren berechneten mittleren Auslaufsteigung bzw. jedem weiteren mittleren Drehverhalten mi wird eine Prognose errechnet. Als sogenannter Drehzahlstützpunkt für die Prognoserechnung wird eine Drehzahl n11 bzw. n21 bei einem Punkt P11 bzw. P21, je nachdem welcher Punkt gerade durchschritten wurde, verwendet. Die Prognoseschritte können dabei auf verschiedenen Einheiten basieren. Beispielweise kann dies an Hand von festen Winkelschritten erfolgen, die sich beispielsweise am Signalgeberrad bzw. Signalrad orientieren können. Dies sind beispielsweise als Winkelschritt 6°. Des Weiteren können sich diese Prognoseschritte auch an festen Zeitschritten orientieren, die beispielsweise fünf Millisekunden sind.

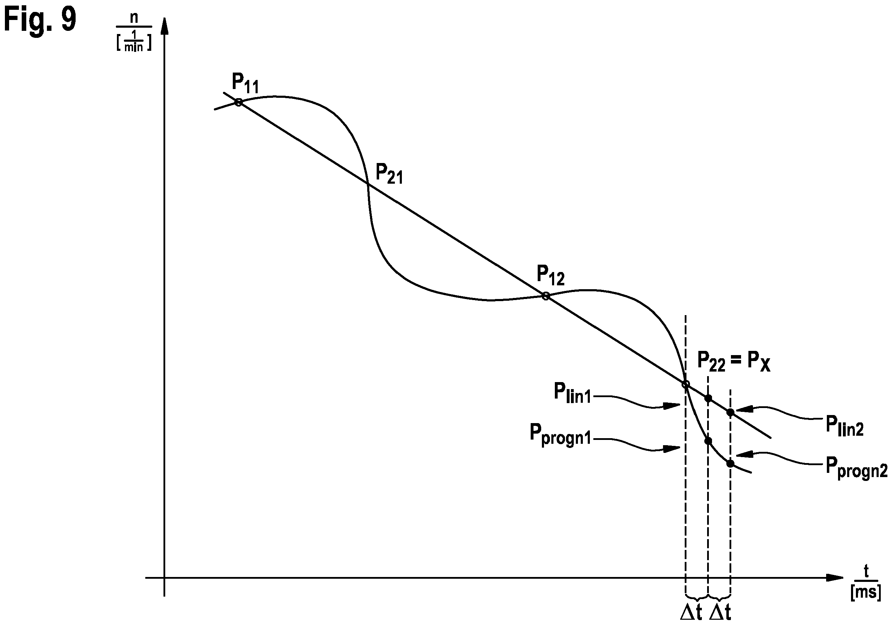

Nachfolgend wird exemplarisch das Verfahren mit festen Zeitschritten vorgestellt. Für die X-te Prognose wird der lineare Anteil des Auslaufs n_lin für die nächsten Zeitschritte i * h berechnet. i entspricht einer natürlichen Zahl, h einem Zeitschritt. Es soll dabei gerade ein Punkt Px (Annahme: P22, Figur 9) durchlaufen sein und die mittlere Auslaufsteigung mx (z. B. als Ergebnis der Steigung zwischen den zwei Punkten P11 und P12 oder mehrerer Steigungen und deren ggf. gleitendem Mittel) ermittelt sein. Hier wird beispielhaft angenommen, dass die Steigung ein gemitteltes Ergebnis der Steigungen zwischen den Punkten P11 und P12 bzw. den Punkten P21 und P22 ist. Es ergibt sich dann die Gleichung

$$(10) \qquad n\_lin_i = n\_Px + mx * i * h \quad ,$$

die den linearen Anteil der Drehzahl zum Zeitpunkt i*h nach dem Zeitpunkt, der dem Punkt Px zugeordnet ist, angibt. Der Zeitpunkt, bei dem sich n_lin_i einstellt, ist dann ti, wobei sich ti zu

$$(11) \qquad ti = ti\_Px + i * h$$

berechnet. ti_Px ist der Zeitpunkt, zu dem sich der Zustand im Punkt Px bzw. P22 ergeben hat.

Im Beispiel nach Figur 9 ist der Punkt Plin1 der Punkt, zu dem sich der lineare Anteil n_lin_i mit i=1 zu n_lin_1 ergibt. Analog dazu gilt dies für den Punkt Plin2, zu dem sich der lineare Anteil n_lin_i mit i=2 zu n_lin_2 ergibt. Der Zeitschritt h entspricht dem in Figur 9 mit Δt bezeichneten Zeitunterschied bzw. Zeitschritt.

Die prognostizierte Drehzahl n prog i zum Zeitpunkt i * h ergibt sich durch Anwendung der Energietransformationskennlinie und der Amplitudenkennlinie auf die vorausberechnete lineare Drehzahl. Der Einfachheit halber wird hier exemplarisch mit der Amplitudenkennlinie mit passendem K-Wert die Korrekturfunktion aus der vorausgegangenen Amplitudenanalyse errechnet.

$$(12) \qquad n\_progn\_i = n\_lin\_i + A(n)*Faktor\_ETF.$$

Der Wert für A(n) ergibt sich durch Berechnung der Gleichung (1) mit dem geeigneten K-Wert aus der ermittelten Korrekturstufe unter Berücksichtigung der Drehzahl, für den der Wert prognostiziert werden soll. Der Faktor_ETF ergibt sich aus Figur 5 bzw. einer Tabelle, aus der sich die Figur 5 bzw. deren Kurve darstellen lässt. Im Punkt Pprogn1 liegt somit die errechnete Drehzahl n_progn_i = n_progn_1, im Punkt Pprogn2 liegt somit die errechnete Drehzahl n_progn_i = n_progn_2 vor. Das Verfahren kann so - d. h. ohne weiteren Abgleich mit tatsächlich durchlaufenen Zuständen und ohne daraus folgende Anpassung der Korrekturstufe fortgeführt werden bis die Drehzahl n_progn_i = 0 ist.

Der Wechselanteil wird somit als Produkt eines normierten Wertes Faktor_ETF und eines drehzahlabhängigen Amplitudenkennwertes A(n) ermittelt.

Es wird somit aus einer Mehrzahl an Kennlinien AST, AK1, Ak2, AK3, AK4, AK5, AK6 eine Kennlinie AST, AK1, Ak2, AK3, AK4, AK5, AK6 ausgewählt, in dem von einem bestimmten gemessenen Zustand n_Px mittels des vergangenen mittleren Drehverhaltens m1; m2; mq, mx eine Differenz zwischen einem Extremum (Minimum, Maximum)) und einem Mittelwert n_lin_i berechnet wird und durch Vergleich mit den unterschiedlichen Kennlinien AST, AK1, Ak2, AK3, AK4, AK5, AK6 eine geeignete Kennlinie AST, AK1, Ak2, AK3, AK4, AK5 oder AK6 für eine Berechnung eines Zustandes der Antriebswelle zu einem späteren Zeitpunktes ti ausgewählt wird.

Das Verfahren kann aber auch fortgeführt werden, indem immer wieder Werte aktualisiert werden. Zu diesen Werten gehört sowohl die Eigenschaft der Antriebswelle 13 bei einem bestimmten wiederkehrenden Winkel. Nach dem Punkt P22 entspräche dies z. B. dem Punkt P23 und der zwischen diesen beiden Punkten tatsächlich vorgelegenen Steigung m oder der Steigung zwischen den Punkten P12 und P13, die zur Aktualisierung herangezogen wird. Des Weiteren würde dann auch die neue Korrekturstufe ermittelt werden und vom tatsächlichen Punkt P13 oder P23 und dessen Eigenschaften (t13, t23, m) wie eben beschrieben der weitere Verlauf der Kurve ermittelt werden.

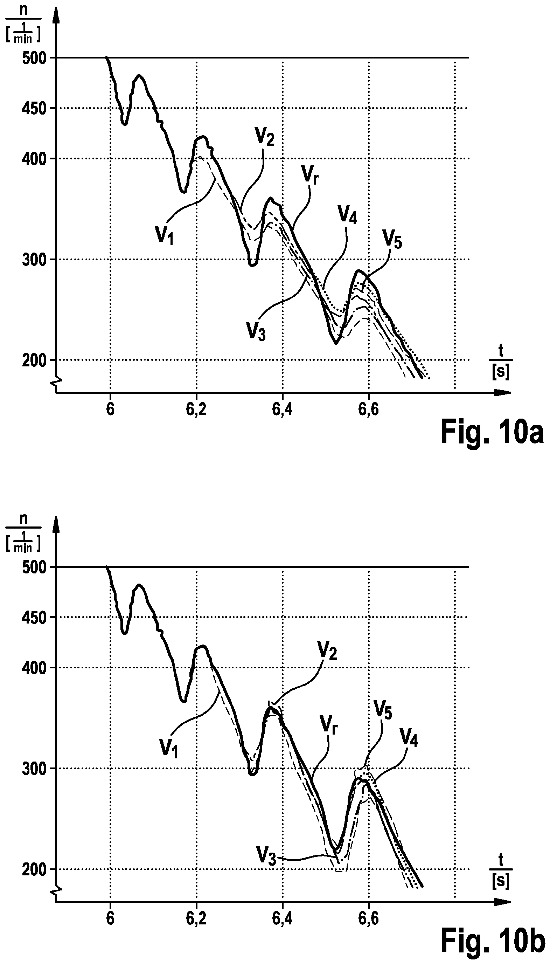

Die Figuren 10a und 10b zeigen die Prognose des Drehzahlverlaufs der Antriebswelle 13 mit unterschiedlichen Amplitudenkorrekturverfahren. So zeigt die Figur 10a neben einem realen Drehzahlverlauf Vr insgesamt fünf verschiedene Verläufe V1, V2, V3, V4 und V5, die mit unterschiedlichen Vorhersageverfahren mit unterschiedlichen Zeitpunkten beginnend ermittelt wurden, die insgesamt alle mit dem sogenannten Kompressionsparameter K = 22000 und ohne Amplitudenkorrektur ermittelt wurden.

Die Figur 10b zeigt abermals einen realen Drehzahlverlauf (gemessen) und fünf andere Vorhersagen bzw. Verläufe V1, V2, V3, V4 und V5 eines Drehzahlverlaufs mit unterschiedlichen Korrekturstufen und dem Kompressionsparameter K = 60000. Es wird beim Vergleich dieser beiden Figuren 10a und 10b deutlich, dass die Prognose des Drehzahlverlaufs in Abhängigkeit von der Amplitudenkorrektur unterschiedlich genau verlaufen kann. In den Beispielen nach Figur 10a und 10b sind die Abweichungen unterschiedlich. So variieren die Werte beim letzten dargestellten relativen Maximum in Figur 10a zwischen 240/min und 290/min. In Figur 10b variieren die Werte zwischen 270/min und 300/min.

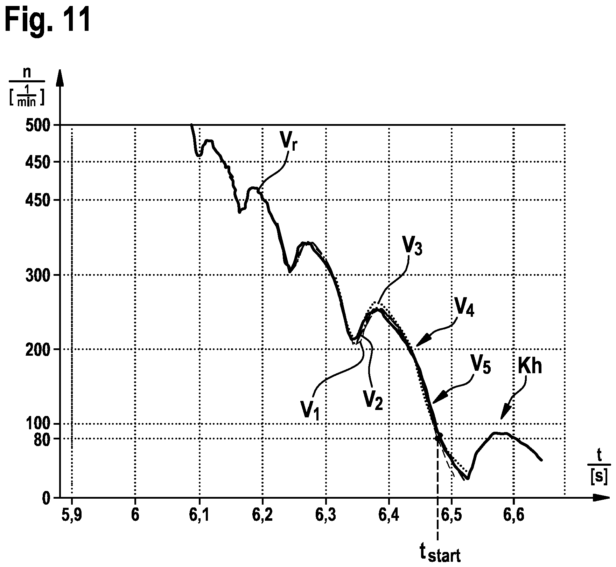

Im Beispiel nach Figur 11 variieren die Werte bei t = 6,4 nur noch um 15/min. Gemäß der Darstellung in Figur 11 wurde innerhalb eines gemessenen Verlaufs Vr die Steigung und auch der Amplitudenhub in der jeweils vorausgegangenen Zündperiode, d. h. zwischen zwei relativen Minima, analysiert. In diesem Fall sollte der Zeitpunkt ermittelt werden, zu dem eine Drehzahl von 80/min erreicht sein würde. Wie erkennbar ist, liegt die Abweichung bei wenigen Hundertsteln einer Sekunde. Zu diesem Zeitpunkt tStart wurde dann ein Starter eingeschaltet, dessen Ritzel vor- und in den Zahnkranz der Brennkraftmaschine eingespurt, um dann bei t= 6,52 die Brennkraftmaschine wieder anzudrehen und folglich die Drehzahl der Brennkraftmaschine bzw. der Antriebswelle 13 zu erhöhen, s. a. den ersten Kompressionshub Kh in Figur 11.

Vorzugweise analysiert ein Lernalgorithmus nach einem festgelegten Schema die im vergangenen Zeitraum benutzten Korrekturmaßnahmen und leitet daraus z. B. einen neuen K-Wert als Standardwert ab bzw. errechnet eine neue angepasste Standardamplitudenkennlinie zur weiteren Verwendung. Im Rahmen dieses Lernalgorithmusses kann beispielsweise im Hinblick auf ein festgelegtes Schema ein festgelegter Zeitraum, eine definierte Kilometerleistung, die Anzahl der Start-Stopp-Zyklen, die Abhängigkeit von Umgebungs- und Betriebsbedingungen und beliebigen Kombinationen der genannten Kriterien erfolgen. Darüber hinaus können Abweichungen berücksichtigt werden, die von Zylinder zu Zylinder bei einer jeden Brennkraftmaschine vorhanden sind. Bei Motoren mit mehreren Zylindern wird jeder Zylinderpaarung ein Korrekturfaktor für die Amplitude bei Rmax und für die Amplitude bei Rmin zugeordnet. Dabei erhält man bei der Analyse des Auslaufs eine für diesen Auslauf geltende mittlere Maximalamplitude. Eine derartige Korrektur kann beispielsweise dann sinnvoll sein, wenn in diesem Fall benachbarte Zylinder bzw. Zylinderpaare unterschiedliche Kompressionsdrücke aufweisen und daher die Maximalamplituden unterschiedlich stark ausfallen können. Eine Zylinderpaarung kann beispielsweise aus einem Zylinder bestehen, der vom sogenannten ZündOT nach UT läuft und dem nächsten Zylinder, der gemäß der Zündfolge von UT nach ZündOT läuft.

Gemäß Figur 12 ist ein Computerprogrammprodukt 50 vorgesehen, das in zumindest einen Programmspeicher 53 mit Programmbefehlen 56 ladbar ist, um alle Schritte des Verfahrens nach zumindest einer der vorstehenden Varianten auszuführen, wenn das Programm in zumindest einem Steuergerät 59 ausgeführt wird.

Es ist ein Steuergerät 59 für einen Start-Stopp-Betrieb einer Brennkraftmaschine 10 in einem Kraftfahrzeug 62 zum kurzfristigen Stoppen und Starten der Brennkraftmaschine 10 vorgesehen, wobei die Brennkraftmaschine 10 mittels einer elektrischen Startvorrichtung bzw. Starter 65 startbar ist, wobei das Steuergerät 59 einen Prozessor 68 mit einem Programmspeicher 53 aufweist. Der Prozessor 68 ist als Erfassungs-, Auswerte- und Steuereinrichtung ausgebildet ist, um die Startvorrichtung 65 definiert anzusteuern, wobei in den Programmspeicher 53 ein Computerprogrammprodukt 50 geladen ist, um das Verfahren auszuführen. Der Sensor 15 ist mittels einer Datenübertragungseinrichtung 70 mit dem Steuergerät 59 verbunden, um Signale zu übertragen. Das Steuergerät 59 ist mittels einer Steuersignalübertragungseinrichtung 73 mit dem Starter 65 verbunden, um zum richtigen Zeitpunkt tStart den Starter 65 einzuschalten, dessen Ritzel in den Zahnkranz vorzuspuren und die Brennkraftmaschine 10 wieder anzudrehen. Die ggf. erforderlichen Speicher 76 zur Aufnahme der Kennfelder sind vorzugsweise im Steuergerät 59 eingebaut.

**Patentansprüche**

1. Verfahren zur Bestimmung einer Drehzahl (nX) einer Antriebswelle (13) einer Brennkraftmaschine (10) zu mindestens einem späteren Zeitpunkt (tX), wobei die sich drehende Antriebswelle (13) verschiedene Drehpositionen (phi11, phi12, phi21, phi22) zu unterschiedlichen Zeitpunkten (t11, t12; t21, t22) einnimmt, wobei aus zumindest zwei Drehpositionen (phi11, phi12; phi21, phi22), die sich jeweils zwischen einem oberen Totpunkt und einem unteren Totpunkt befinden, ein vergangenes mittleres Drehverhalten (m1; m2; mi) ermittelbar ist, wobei dieses einer mittleren Drehzahländerung zwischen den zumindest zwei Drehpositionen (Phi11, phi12; phi21, phi22) entspricht, und daraus auf eine mittlere Drehzahl (nX) zu mindestens einem späteren Zeitpunkt (tX) geschlossen wird.

2. Verfahren nach Anspruch 1, **dadurch gekennzeichnet, dass** nach dem Ermitteln eines vergangenen mittleren Drehverhaltens (m1) ein weiteres vergangenes mittleres Drehverhalten (m2) ermittelt wird.

3. Verfahren nach Anspruch 2, **dadurch gekennzeichnet, dass** das weitere vergangene mittlere Drehverhalten (m2) dazu verwendet wird, um auf eine mittlere Drehzahl (n_mX) zu mindestens einem späteren Zeitpunkt (tX) zu schließen.

4. Verfahren nach Anspruch 3, **dadurch gekennzeichnet, dass** das oder mehrere weitere vergangene mittlere Drehverhalten (m1, m2) dazu verwendet wird bzw. werden, um einen arithmetischen Mittelwert des mittleren Drehverhaltens (mq) zu ermitteln.

5. Verfahren nach Anspruch 4, **dadurch gekennzeichnet, dass** der arithmetische Mittelwert des mittleren Drehverhalten (mq) ein gleitender Mittelwert ist, wobei zur Ermittlung eines aktuellen arithmetischen Mittelwerts des mittleren Drehverhaltens (mq) ein älteres vergangenes mittleres Drehverhalten gegen ein jüngeres vergangenes mittleres Drehverhalten ausgetauscht wird.

6. Verfahren nach Anspruch 1 oder einem der Ansprüche 3 bis 5, **dadurch gekennzeichnet, dass** zur Ermittlung einer prognostizierten Drehzahl (nX) zu einer mittleren Drehzahl (n_lin_i) zu einem Zeitpunkt ein Wechselanteil addiert wird.

7. Verfahren nach Anspruch 6, **dadurch gekennzeichnet, dass** der Wechselanteil als Produkt eines normierten Wertes (Faktor_ETF) und eines drehzahlabhängigen Amplitudenkennwertes (A(n)) ermittelt wird.

8. Verfahren nach Anspruch 7, **dadurch gekennzeichnet, dass** ein normierter Wert (Faktor_ETF) in einem Kennfeld gespeichert ist, wobei einem normierten Wert eine Drehposition (PHI) zugeordnet ist und ein drehzahlabhängiger Amplitudenkennwert (A(n)) in einem anderen Kennfeld gespeichert ist.

9. Verfahren nach Anspruch 8, **dadurch gekennzeichnet, dass** in Abhängigkeit von der Drehzahl (n) der Antriebswelle (13) mehrere unterschiedliche Kennlinien (AST, AK1, Ak2, AK3, AK4, AK5, AK6) in einem oder mehreren Kennfeldern gespeichert sind, wobei über die mehreren unterschiedlichen Kennlinien (AST, AK1, Ak2, AK3, AK4, AK5, AK6) unterschiedliche Amplitudenkennwerte ermittelbar sind.

10. Verfahren nach Anspruch 9, wobei aus einer Mehrzahl an Kennlinien (AST, AK1, Ak2, AK3, AK4, AK5, AK6) eine Kennlinie (AST, AK1, Ak2, AK3, AK4, AK5, AK6) ausgewählt wird, in dem von einem bestimmten gemessenen Zustand (n_Px) mittels des vergangenen mittleren Drehverhaltens (m1; m2; mq) eine Differenz zwischen einem Extremum (Minimum, Maximum)) und einem Mittelwert (n_lin_i) berechnet wird und durch Vergleich mit den unterschiedlichen Kennlinien (AST, AK1, Ak2, AK3, AK4, AK5, AK6) eine geeignete Kennlinie (AST, AK1, Ak2, AK3, AK4, AK5, AK6) für eine Berechnung eines Zustandes der Antriebswelle zu einem späteren Zeitpunktes (ti) ausgewählt wird.

11. Verfahren nach einem der Ansprüche 6 bis 10, **dadurch gekennzeichnet, dass** ein Zeitpunkt (tStart) errechnet wird, zu dem spätestens ein Starter (65) eingeschaltet wird, damit dieser mit seinem Ritzel in einen Zahnkranz der Brennkraftmaschine (10) einspurt.

12. Verfahren nach einem der vorstehenden Ansprüche, **dadurch gekennzeichnet, dass** das Verfahren mit der Ermittlung von Drehpositionen (PHI11, PHI 12; PHI 21, PHI 22) und deren zugeordneten Zeitpunkten (t11, t12; t21, t22) unterhalb einer eingestellten Drehzahlschwelle (n0) beginnt.

13. Computerprogrammprodukt, das in zumindest einen Programmspeicher (53) mit Programmbefehlen (56) ladbar ist, um alle Schritte des Verfahrens nach zumindest einem der vorstehenden Ansprüche auszuführen, wenn das Programm in zumindest einem Steuergerät (59) ausgeführt wird.

14. Steuergerät für einen Start-Stopp-Betrieb einer Brennkraftmaschine (10) in einem Kraftfahrzeug (62) zum kurzfristigen Stoppen und Starten der Brennkraftmaschine (10), wobei die Brennkraftmaschine (10) mittels einer elektrischen Startvorrichtung (65) startbar ist, wobei das Steuergerät (59) einen Prozessor (68) mit einem Programmspeicher (53) aufweist, **dadurch gekennzeichnet, dass** der Prozessor (68) als Erfassungs-, Auswerte- und Steuereinrichtung ausgebildet ist, um die Startvorrichtung (65) definiert anzusteuern, wobei in den Programmspeicher (53) ein Computerprogrammprodukt gemäß Anspruch 13 geladen ist, um das Verfahren gemäß einem der Ansprüche 1 bis 12 auszuführen.

**Claims**

1. Method for determining a rotational speed (nX) of a driveshaft (13) of an internal combustion engine (10) at at least one later point in time (tX), wherein the rotating driveshaft (13) assumes various rotary positions (phi11, phi12, phi21, phi22) at different points in time (t11, t12; t21, t22), wherein a past average rotary behavior (m1; m2; mi) can be determined from at least two rotary positions (phi11, phi12, phi21, phi22) which are situated in each case between a top dead center and a bottom dead center, wherein said rotary behavior corresponds to an average rotational speed change between the at least two rotary positions (phi11, phi12, phi21, phi22), and an average rotational speed (nX) is inferred therefrom at at least one later point in time (tX).

2. Method according to Claim 1, **characterized in that** a further past average rotary behavior (m2) is determined after a past average rotary behavior (m1) has been determined.

3. Method according to Claim 2, **characterized in that** the further past average rotary behavior (m2) is used to infer an average rotational speed (n_mX) at at least one later point in time (tX).

4. Method according to Claim 3, **characterized in that** the past average rotary behavior or a plurality of further past average rotary behaviors (m1, m2) is or are used to determine an arithmetic mean value of the average rotary behavior (mq).

5. Method according to Claim 4, **characterized in that** the arithmetic mean value of the average rotary behavior (mq) is a moving mean value, wherein an older past average rotary behavior is exchanged for a more recent past average rotary behavior for determining a current arithmetic mean value of the average rotary behavior (mq).

6. Method according to Claim 1 or one of Claims 3 to 5, **characterized in that** an alteration component is added to an average rotational speed (n_lin_i) at a point in time for determining a prognosticated rotational speed (nX).

7. Method according to Claim 6, **characterized in that** the alteration component is determined as the product of a standardized value (Factor_ETF) and a rotational-speed-dependent amplitude characteristic value (A(n)).

8. Method according to Claim 7, **characterized in that** a standardized value (Factor_ETF) is stored in a characteristic map, wherein a rotary position (PHI) is assigned to a standardized value and a rotational-speed-dependent amplitude characteristic value (A(n)) is stored in another characteristic map.

9. Method according to Claim 8, **characterized in that**, depending on the rotational speed (n) of the driveshaft (13), a plurality of different characteristic curves (AST, AK1, Ak2, AK3, AK4, AK5, AK6) are stored in one or more characteristic maps, wherein different amplitude characteristic values can be determined using the plurality of different characteristic curves (AST, AK1, Ak2, AK3, AK4, AK5, AK6).

10. Method according to Claim 9, wherein a characteristic curve (AST, AK1, Ak2, AK3, AK4, AK5, AK6) is selected from a plurality of characteristic curves (AST, AK1, Ak2, AK3, AK4, AK5, AK6) in that a difference between an extremum (minimum, maximum) and a mean value (n_lin_i) is calculated from a specific measured state (n_Px) by means of the past average rotary behavior (m1; m2; mq) and, by comparison with the different characteristic curves (AST, AK1, Ak2, AK3, AK4, AK5, AK6), a suitable characteristic curve (AST, AK1, Ak2, AK3, AK4, AK5, AK6) for calculating a state of the driveshaft at a later point in time (ti) is selected.

**EP 2 539 576 B1**

11. Method according to one of Claims 6 to 10, **characterized in that** a point in time (tStart) at which a starter (65) is switched on at the latest so that it engages with its pinion into a toothed ring of the internal combustion engine (10) is calculated.

12. Method according to one of the preceding claims, **characterized in that** the method begins with the determination of rotary positions (PHI11, PHI12; PHI21, PHI22) and the assigned points in time (t11, t12; t21, t22) thereof below a set rotational speed threshold (n0).

13. Computer program product which can be loaded into at least one program memory (53) with program commands (56) in order to execute all of the steps of the method according to at least one of the preceding claims if the program is executed in at least one control unit (59).

14. Control unit for start-stop operation of an internal combustion engine (10) in a motor vehicle (62) for rapidly stopping and starting the internal combustion engine (10), wherein the internal combustion engine (10) can be started by means of an electric starting apparatus (65), wherein the control unit (59) has a processor (68) with a program memory (53), **characterized in that** the processor (68) is formed as a measurement, evaluation and control device in order to activate the starting apparatus (65) in a defined manner, wherein a computer program product according to Claim 13 is loaded into the program memory (53) in order to execute the method according to one of Claims 1 to 12.

**Revendications**

1. Procédé permettant de déterminer une vitesse de rotation (nX) d'un arbre d'entraînement (13) d'un moteur à combustion interne (10) à au moins un instant ultérieur (tX), l'arbre d'entraînement en rotation (13) adoptant différentes positions de rotation (phi11, phi12 ; phi21, phi22) à des instants différents (t11, t12 ; t21, t22), un comportement de rotation moyen antérieur (m1 ; m2 ; mi) pouvant être déterminé à partir d'au moins deux positions de rotation (phi11, phi12 ; phi21, phi22) qui se trouvent chacune entre un point mort haut et un point mort bas, ce comportement de rotation correspondant à une variation de vitesse de rotation moyenne entre les au moins deux positions de rotation (phi11, phi12 ; phi21, phi22), et l'on en déduit une vitesse de rotation moyenne (nX) à au moins un instant ultérieur (tX).

2. Procédé selon la revendication 1, **caractérisé en ce qu'**après avoir déterminé un comportement de rotation moyen antérieur (m1), on détermine un comportement de rotation moyen antérieur supplémentaire (m2).

3. Procédé selon la revendication 2, **caractérisé en ce que** le comportement de rotation moyen antérieur supplémentaire (m2) est utilisé pour en déduire une vitesse de rotation moyenne (n_mX) à au moins un instant ultérieur (tX).

4. Procédé selon la revendication 3, **caractérisé en ce que** le ou plusieurs comportements de rotation moyens antérieurs supplémentaires (m1, m2) est ou sont utilisés afin de déterminer une moyenne arithmétique du comportement de rotation moyen (mq).

5. Procédé selon la revendication 4, **caractérisé en ce que** la moyenne arithmétique du comportement de rotation moyen (mq) est une moyenne glissante, un comportement de rotation moyen antérieur plus ancien étant remplacé par un comportement de rotation moyen antérieur plus récent pour déterminer une moyenne arithmétique actuelle du comportement de rotation moyen (mq).

6. Procédé selon la revendication 1 ou selon l'une quelconque des revendications 3 à 5, **caractérisé en ce que** pour déterminer une vitesse de rotation pronostiquée (nX) on ajoute une proportion de changement à une vitesse de rotation moyenne (n_lin_i) à un instant.

7. Procédé selon la revendication 6, **caractérisé en ce que** la proportion de changement est déterminée comme étant le produit d'une valeur normée (Facteur_ETF) et d'une valeur caractéristique d'amplitude dépendant de la vitesse de rotation (A(n)).

8. Procédé selon la revendication 7, **caractérisé en ce qu'**une valeur normée (Facteur_ETF) est mémorisée dans un champ caractéristique, une position de rotation (PHI) étant associée à une valeur normée et une valeur caractéristique d'amplitude dépendant de la vitesse de rotation (A(n)) étant mémorisée dans un autre champ caractéristique.

9. Procédé selon la revendication 8, **caractérisé en ce qu'**en fonction de la vitesse de rotation (n) de l'arbre d'entraî-

14

nement (13), plusieurs courbes caractéristiques différentes (AST, AK1, Ak2, AK3, AK4, AK5, AK6) sont mémorisées dans un ou plusieurs champs caractéristiques, différentes valeurs caractéristiques d'amplitude pouvant être déterminées par le biais des plusieurs courbes caractéristiques différentes (AST, AK1, Ak2, AK3, AK4, AK5, AK6).

10. Procédé selon la revendication 9, dans lequel une courbe caractéristique (AST, AK1, Ak2, AK3, AK4, AK5, AK6) est sélectionnée parmi une pluralité de courbes caractéristiques (AST, AK1, Ak2, AK3, AK4, AK5, AK6), dans laquelle une différence entre un extrême (minimum, maximum) et une valeur moyenne (n_lin_i) est calculée à partir d'un état mesuré déterminé (n_Px) au moyen du comportement de rotation moyen antérieur (m1 ; m2 ; mq) et, par comparaison avec les différentes courbes caractéristiques (AST, AK1, Ak2, AK3, AK4, AK5, AK6), une courbe caractéristique appropriée (AST, AK1, Ak2, AK3, AK4, AK5, AK6) est sélectionnée pour un calcul d'un état de l'arbre d'entraînement à un instant ultérieur (ti).

11. Procédé selon l'une quelconque des revendications 6 à 10, **caractérisé en ce qu'**un instant (tStart) est calculé, auquel au plus tard un démarreur (65) est mis en marche, afin que celui-ci s'engrène avec son pignon dans une couronne dentée du moteur à combustion interne (10).

12. Procédé selon l'une quelconque des revendications précédentes, **caractérisé en ce que** le procédé commence avec la détermination de positions de rotation (PHI11, PHI12 ; PHI21, PHI22) et leurs instants associés (t11, t12 ; t21, t22) en dessous d'un seuil de vitesse de rotation ajusté (n0).

13. Produit de programme informatique qui peut être chargé dans au moins une mémoire programmable (53) avec des commandes de programme (56), afin d'exécuter toutes les étapes du procédé selon au moins l'une quelconque des revendications précédentes lorsque le programme est exécuté dans au moins un appareil de commande (59).

14. Appareil de commande pour un fonctionnement à arrêt et démarrage automatique d'un moteur à combustion interne (10) dans un véhicule automobile (62) pour l'arrêt bref et le démarrage du moteur à combustion interne (10), le moteur à combustion interne (10) pouvant être démarré au moyen d'un dispositif de démarrage électrique (65), l'appareil de commande (59) présentant un processeur (68) avec une mémoire programmable (53), **caractérisé en ce que** le processeur (68) est réalisé sous forme de dispositif de détection, d'analyse et de commande, afin de de commander de manière définie le dispositif de démarrage (65), un produit de programme informatique selon la revendication 13 étant chargé dans la mémoire programmable (53) afin d'exécuter le procédé selon l'une quelconque des revendications 1 à 12.

# Fig. 1

# Fig. 2

# Fig. 3

Fig. 4

# Fig. 5

# Fig. 6

# Fig. 7

# Fig. 8

Fig. 9

EP 2 539 576 B1

Fig. 10a

Fig. 10b

# Fig. 11

# Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006011644 A1
- DE 102006039112 A1
- DE 102008041037
- DE 102008041037 A1
- DE 102005033692 A1